# EUROPEAN PATENT APPLICATION

(11) **EP 1 455 419 A1**
(43) Date of publication of application: **08.09.2004**
(21) Application number: 03004375.6
(22) Date of filing: 03.03.2003
(51) Int. Cl.: H01R 13/516, H01R 13/514, H04Q 1/14

(54) **Telecommunications module and combination including at least one telecommunications module**

(71) Applicant: 3M Innovative Properties Company, St. Paul, Minnesota 55133-3427 (US)
(72) Inventor: Denter, Friedrich, 44575 Castrop-Rauxel (DE); Otto, Hans-Dieter, 51688 Wipperfürth (DE); Schaub, Cornel, 42281 Wuppertal (DE)
(74) Representative: HOFFMANN - EITLE

(57) **Abstract**

A telecommunications module (228) has a front (230), a rear, a top, a bottom and two side faces. Contacts are exposed on the front face (230). The front face (230) is exposed in a mounted state so as to allow the connection of wires and/or plugs with the contacts. At least one connector (256, 258) for receiving a complementary connector from the top, the bottom or a side, is provided on at least one of the top, the bottom and the side faces.

A combination includes at least one telecommunications module and at least one carrier, which is adapted to allow the telecommunications module to be mounted thereon.

## Description

### Technical Field

The invention relates to a telecommunications module and a combination including at least one telecommunications module.

### Background

In the field of telecommunications, numerous customers are connected with the switch of telecommunications company via telecommunications lines. The customers can also be called subscribers. The switch is also called exchange. Between the subscriber and the switch, sections of the telecommunications lines are connected with telecommunications modules. The telecommunications modules establish an electrical connection between a wire, which comes in at a first side, and a wire, which extends from the telecommunications module at a second side. In the telecommunications module, disconnection points can be located in the electrical connection between the two sides. At such disconnection points, disconnection plugs can be inserted, in order to disconnect the line. Furthermore, protection plugs and magazines are known. These are connected to the module and protect any equipment connected to the wires from overcurrent and overvoltage. Finally, test plugs can be inserted at a disconnection point in order to test or monitor a line.

The described telecommunications modules can be located at any type of distribution points. A typical distribution point is the main distribution frame located in the central office of a telecommunications company. However, further distribution points are known in the art, such as distribution points outside the central office, which e.g. serve a number of streets or houses. Also, office buildings or floors within buildings can have distribution points.

Recently, ADSL-technology has spread widely in the field of telecommunications. This technology allows two different signals to be transmitted by a single line. This is achieved by making use of different frequency bands, in which the different signals are transmitted. The signals are combined at a particular point in the telecommunications line. The combined signal and is split at another point. After splitting the signal, the so-called POTS (plain old telephone system)- signal can be used to transmit a "normal" telephone signal. Furthermore, the "other" part of the split signal can be used to transmit data, for example. The so-called splitters, which are used to split the signal, can in general be arranged in any distribution point.

It has been disclosed by WO 01/97339 A1 to incorporate a splitter into a telecommunications module. In the module according to WO 01/97339 A1, a printed circuit board carrying the necessary filters and electrical components for realising the splitter, is inserted into a first housing. A second housing, having the necessary contacts of the telecommunications module, is attached to the first housing. A plug, at which a cable terminates, can be connected with the telecommunications module from a rear side.

EP 0 364 658 A discloses a distribution means which can receive connectors from a front side.

### Summary of the Invention

The invention provides a telecommunications module, which allows a high density of electrical connections, formed in a distribution point in the field of telecommunications. In particular, a high number of subscribers can be served in a space saving manner by means of the telecommunications module. Furthermore, a combination of at least one telecommunications module having the above advantages and at least one carrier is provided.

The telecommunications module has a front, a rear, a top, a bottom and two side faces. Contacts are exposed at the front face. The front face is exposed in a mounted state so as to allow the connection of wires and/or plugs with the contacts. At least one connector for receiving a complementary connector is provided on at least one of the top, the bottom and the side faces so as to allow the complementary connector to be received from the top, the bottom or a side.

Despite the recitation of a front, a rear, a top, a bottom and two side faces, the telecommunications module does not necessarily have a regular, rectangular appearance. Rather, any shape and configuration, which might be suitable for the specific purpose, are possible. A front face is defined by the fact that contacts are exposed on the front face. In particular, the front face is exposed in a mounted state. This allows wires or cables to be connected with the contacts. Thus, the contacts can be adapted to allow the connection of wires. E.g., the contacts can be formed as IDCs (insulation displacement contacts). These contacts usually comprise an open slit. A wire is inserted into the slit such that an isolation of the wire is cut by the edges of the slit. Thus, the metallic core of the wire is contacted. Furthermore, the contacts of the telecommunications module can be formed as wire-wrap pins.

The exposed ends of wires can be wrapped around these pins. In this manner, electrical connection is established. The contacts of the telecommunications module can also be formed as contacts, which are adapted to be coupled with a connector or a plug so as to establish electrical connection between the contacts of the telecommunications module and the contacts of the connector or plug. In this case, the contacts can be formed in a manner, which does not allow wires to be connected therewith. As an alternative, contacts, which are also adapted for the connection of wires, can be formed connectable with a connector or plug, which can be fitted to the front face of the telecommunications module. In any case, the front face of the telecommunications module can include one or more connectors, stationary plugs or sockets for receiving complementary connectors or plugs. Generally, the fact that the contacts are exposed merely means that they are accessible in a manner to establish electrical connection with wires, cables and/or the contacts of a connector, which can be coupled with the telecommunications module. In other words, the contacts do not necessarily have to project from the front face of the telecommunications module. Rather, they can be located in an opening or cavity in the front face of the telecommunications module so as to allow the above-described connections and functions to be performed.

Usually, the front face is exposed in a mounted state so as to face to the front. This means that when the telecommunications module is seen in the mounted state, the front face is primarily visible. In particular, the front face is exposed in a manner to allow the connection of wires and/or plugs with the contacts of the telecommunications module. As will be apparent to those skilled in the art, wires, which constitute a section of a telecommunications line, which eventually lead to the subscriber or switch, can be connected with the contacts of the telecommunications module at the front face thereof. These connections can be formed changeable so that the connections can be adjusted, when necessary.

In a novel manner, at least one connector is provided on at least one of the top, bottom and the side faces of the telecommunications module. In this way, the invention makes use of parts of the telecommunications module for the connection of wires, which have not been used for this purpose so far. In contrast to a connector being formed at the rear side for receiving a plug from the rear, the provision of one or more connectors on the top, bottom or side faces provides advantages with regard to the handling properties. The mentioned areas are much more easily accessible than the rear. Therefore, the necessary electrical connections by means of inserting a complementary connector into the connector of the telecommunications module can readily be carried out. In particular, more than one connector can be provided on at least one of the top, bottom and the side faces.

In a broad sense, the connector provided on one of the mentioned faces of the telecommunications module can also be constituted by one or more contacts. These contacts can be of the same type which is used at the front face of the telecommunications module. Wires can be connected with these contacts also at one of the mentioned faces so as to increase that area of the telecommunications module, which is used for the connection of wires. In the case of one or more contacts, the complementary connector can be constituted by a suitably prepared wire and/or one or more connectors in the form of a plug or a similar component. The term "complementary connector" is to be construed broadly in that it merely means that the connector is adapted to establish electrical connection with contacts and/or connectors provided on the top, the bottom and/or at least one side face. In connection with the telecommunications module, the complementary connector, which is electrically connectable with the telecommunications module, comprises one or more wires or cables extending therefrom. In particular, the combination of the telecommunications module, as described above as well as below, and at least one connector comprising a wire or cable extending therefrom and being connectable with the telecommunications module, is to be considered a part of the present disclosure.

By means of the novel telecommunications module, the density of electrical connections in a distribution point in the field of telecommunications can be remarkably increased. As regards the type of distribution point, the telecommunications module is applicable in any type of distribution point, such as a main distribution frame, a colocation distribution point, a cable cabinet. Any of these distribution points can be provided indoors or outdoors. A high density can also be maintained, when additional components are to be accommodated in a telecommunications module. This would generally increase the size of a telecommunications module and reduce the density. However, with the novel telecommunications module, areas and.parts thereof, which have up to now not been used for establishing electrical connections, are utilized in order to achieve or maintain a high density. In particular, the number of subscriber lines, which can be connected with the contacts of the telecommunications module at a front part thereof, can be made comparably high. The number of subscribers, which can be served by a single telecommunications module, can be as high as in a known "standard" module. Particularly, this is also the case, if further components are incorporated into the novel telecommunications module. As an example, splitter circuits can be incorporated into the telecommunications module. These splitter circuits are related to the use of ADSL-technology, in which more than one signal is transmitted via a single telecommunications line in separate frequency bands. The combined signal, incorporating more than one signal, is split or combined by means of a so-called splitter. The split signals are transmitted further by appropriate contacts and wires. In a corresponding manner, the combined signal is created from two separate signals at a suitable point in the telecommunications line.

As can readily be seen, the use of ADSL-technology generally involves additional electrical connections. These need to be established in connection with the splitter. As the splitter can be incorporated into the telecommunications module, additional electrical connections are required for the telecommunications module. This is advantageously solved by means of the novel telecommunications module by virtue of the fact that the sides and/or the top and/or the bottom are used for these additional electrical connections. In particular, any electrical connections, which will most likely not require frequent changes, can be formed via the one or more connector of the telecommunications module. E.g., in ADSL-technology, a plug at the end of a cable, which leads to a DSLAM, can be connected with the telecommunications module via one or more connectors. A DSLAM is a device, which processes signals, which will, for example, transmit data. The signals can be one part of the above-described combined signal. It can be expected that a cable, which leads to a DSLAM and contains an appropriate number of wires, each associated with a particular subscriber, can remain connected with a telecommunications module for a considerable amount of time.

This is taken into account in the novel telecommunications module. E.g., the telecommunications module can have a connector at either side face, the bottom or the top adapted to receive a plug of a cable leading to a DSLAM. Thus, the requirements regarding the general handling and the changes of the electrical connections are met. At the same time, the number of subscribers, for which the telecommunications lines can be connected to a particular telecommunications module, can be kept high, as the sides, the top and the bottom of the telecommunications module are additionally used for the necessary connections with e.g. the DSLAM. In the same manner, one or more connectors of the telecommunications module can be used for receiving a plug, from which plural ISDN- or POTS- (plain old telephone system) wires extend. The connector for receiving a plug connected with a DSLAM can be provided on a first side, and a connector for receiving a plug connected with ISDN or POTS lines can be provided on a second side, opposite to the first side. Especially in this case, the top and bottom face of the telecommunications module can have a closed configuration. In other words, the top and bottom face are formed continuous and not adapted to receive wires, connectors, etc. In this manner, plural telecommunications modules can be provided in a stacked arrangement and/or an arrangement adjacent to each other at the top and/or bottom faces. Such an arrangement constitutes a block including plural telecommunications modules realizing a high density of electrical connections, as the telecommunications modules can be stacked or generally located close to each other along the top and bottom face thereof.

In the telecommunications module, at least one connector can be any type of connector suitable for establishing electrical connection. The connector can comprise a single up to plural contacts. The connector can be formed as a socket, a jack, a stationary plug or in any other suitable manner.

The contacts can be of any type. In particular, different types of IDCs can be provided in the telecommunications module. E.g. contacts which are known as SID contacts, ID 3000-contacts, offered by the applicant or LSA+-contacts can be incorporated into the telecommunications module. In this manner, comparably inexpensive telecommunications modules can be provided with a specific type of contacts in accordance with the needs and/or the telephone company's preference. Furthermore, the front part of the telecommunications module can be adapted to the type of contacts incorporated therein. In this manner, it is possible to allow the use of specialised tools in order to connect wires by means of a specific type of contact with the telecommunications module. Furthermore, a specific type of contact can be combined with another type of housing surrounding the contacts. E.g., ID 3000-contacts can be combined with a housing, which is known for SID-strips or modules available from the applicant, for accommodating the contacts. Thus, termination tools, which are adapted to the SID-housing known from the applicant, can be used in connection with the described telecommunications module.

In addition to the at least one connector, which is provided on the top, bottom and/or at least one side face, the telecommunications module can further comprise a connector, which is provided at the front and/or rear face. In this manner, the advantage of quickly connecting a number of wires, which terminate at the complementary connector, with the connector of the telecommunications module, can be used for additional sides of the telecommunications module.

The one or more connector of the telecommunications module can be provided on a printed circuit board (PCB). Thus, the telecommunications module can comprise at least one PCB. The PCB can carry the one or more connector, the electrical connections between the contacts of the telecommunications module as well as any electrical components. E.g., one or more splitter circuits as well as protection components of any type can be located on the printed circuit board.

The printed circuit board can be removable from the telecommunications module. In this way, a particular type of printed circuit board can be replaced by another type. By such a replacement, the telecommunications module can be changed and adjusted with regard to the functions to be performed. E.g., the telecommunications module can first be provided as a module which merely provides the electrical connections between various contacts. In a second step, the PCB providing the electrical connections can be replaced by another PCB, on which one or more splitter circuits are formed in addition to the electrical connections. Thus, the telecommunications module can be changed to a splitter module. The connection between the PCB, which can be replaceable, and the contacts of the telecommunications module can be realized by fork contacts. In this case, a tab-like portion of the contact can, e.g. in the interior of the telecommunications module, be accommodated in a slit of the fork contact so as to establish electrical connection.

The PCB can have at least one recess. In particular, the one or more connector can be located in the vicinity of a recess. This leads to a space saving configuration for the telecommunications module, at least in the direction, in which the recess is formed. When a complementary connector, at which a number of wires terminate, is connected with the connector of the telecommunications module, the complementary connector will, at least partially, be located in the recess. Thus, the assembly of the telecommunications module and at least one complementary connector, which is connected therewith, can be formed to save space in that direction, in which the recess is formed. The same effect is obtained in a case, in which the telecommunications module has a housing, and the housing has at least one recess. One or more connectors can be accommodated in the one or more recess in order to save space. Furthermore, one or more recess formed in the housing can be combined with one or more recesses formed in the PCB.

As mentioned before, the telecommunications module can include one or more splitter circuits. In particular, the necessary filters and further electrical components, with one or more splitter circuits, can be located on the PCB. Thus, an integrated splitter module, which can advantageously be used in ADSL-technology is formed.

The telecommunications module can further include at least one test access. As regards a test access in a telecommunications module, reference is made to DE 202 03 911 and/or the corresponding international patent application filed by the applicant, of which the disclosure is incorporated herein by means of reference. The test access allows specific electrical connections or functions to be tested from a remote test device.

The telecommunications module can be combined with a control module, which is electrically connected with the telecommunications module. The control module can be provided in order to control and manage the necessary switching and any other operations, which might be necessary in order to enable testing of a particular electrical connection and/or the line connected therewith. The control module can be connected with one or more telecommunications modules by means of a bus. Furthermore, complementary connectors can be provided on the control module on the one hand and the telecommunications module on the other hand. As the contacts and/or connections in the telecommunications module can be formed so as to be accessed by the control module, the telecommunications module can be called an access module.

The telecommunications module can further be combined with a marking element. The marking element can be formed as a frame or bridge, which can be attachable at the front face of the module. A suitable strip, e.g. made of plastic, cardboard or paper, can be accommodated in the frame or on the bridge. Thus, the telecommunications module can be suitably marked.

The telecommunications module can, furthermore, be combined with at least one carrier, which is adapted to allow the telecommunications module to be mounted thereon. The carrier can be formed trough-like and can have suitable openings or locking edges, which can cooperate with latch means, particularly, latch hooks of the telecommunications module. In particular, any carriers, such as those known with the names Flexirail, ID 3000, SID or LSA-plus, offered by the applicant, can be used. The carrier can be adapted to carry plural telecommunications modules. Moreover, the carrier can be mountable to a telecommunications rack mount or any other mounting system, which can be used or even already be present in a distribution point, in particular, a main distribution frame or a cable cabinet.

The carrier can be adapted to allow the holding of a connector, from which a cable extends, thereon. Such a connector can be a connector, which is complementary to a connector of the telecommunications module. Thus, the connector held by the carrier can be connected with the connector of the telecommunications module. This measure allows a cost effective, step-by-step build up of any type of distribution point with the combination of at least one carrier and at least one telecommunications module. In a first step, the carrier is mounted in the distribution point. In connection therewith, the electrical connections with devices like DSLAMs or the switch of the telecommunications company can be installed. In particular, several of these connections can be bundled in a cable. At the end of the cable, a connector, e.g. a plug, can be provided. In completion of the first step, one or more connectors can be held by the carrier. In this way, the basis for a distribution point is established. In a second step, one or more telecommunications modules are mounted to the carrier, and the already prepared connectors can be connected therewith. Thus, significant costs, which are incurred with the provision of the telecommunications modules, can be delayed until the completed electrical connections for a number of subscribers are actually needed. Furthermore, different suppliers might be responsible for the telecommunications modules on the one hand and the electrical connections with the DSLAM, etc. on the other hand. The necessary operations can be well organized, when the above-described basis can be provided by mounting the carrier and preparing the connectors including the cables extending therefrom. In the second step, the telecommunications modules can be mounted to the carrier, and the assembly can be completed by connecting the prepared connectors with the telecommunications module.

The combination of at least one carrier and at least one telecommunications module can include at least one adapter. The adapter can be mountable to the carrier. Furthermore, the adapter can be adapted to hold the connector thereon. Thus, the carrier does not have to be specifically adapted to hold the connector. Rather, the carrier as such merely has to hold the adapter. However, the adapter can be formed so as to be mountable to a typical carrier and so as to hold one or more connectors. The use of an adapter, furthermore, has the advantage that the adapter can be detached and re-used with further carriers, when the connectors do not have to be held by the adapter anymore, as the telecommunications modules have been mounted to the carrier, and the connectors have been connected therewith.

The carrier can include at least one cable guide. The cable guide can accommodate the cable extending from a connector, which can be mountable to the carrier. Furthermore, the cable guide can be suitably formed so as to clamp or sufficiently hold the cable. Thus, the cable guide can constitute a measure which allows the mounting of one or more connectors including a cable extending therefrom, to the carrier.

It is additionally to be noted that the carriers as such including the features thereof, as outlined above, also have certain advantages without being combined with the telecommunications module described above. In particular, a carrier as such including one or more of the mentioned features, is considered a part of the present disclosure.

It should, furthermore, be noted that the telecommunications module and/or the carrier can advantageously be used in a distribution point, in which several subscriber lines, which have been served by a first telecommunications company, are made accessible, to a second, possibly new telecommunications company. This will be the case, when a new telecommunications company takes over responsibility for certain subscribers. Such a distribution point can be called a collocation distributor. Such a distribution point can be kept small and space saving with the resulting economic advantages by means of the novel telecommunications module and/or the described carrier.

### Brief Description of the Drawings

Hereinafter, the invention will be described by means of nonlimiting examples with reference to the drawings, in which:
- Fig. 1: shows schematically a carrier and two adapters for holding two connectors;
- Fig. 2: shows schematically a telecommunications module mounted to the carrier of Fig. 1;
- Fig. 3: shows a perspective view of a part of a carrier in a second embodiment with plural connectors and two telecommunications modules;
- Fig. 4: shows a perspective view of a first embodiment of the telecommunications module;
- Fig. 5: shows a perspective view of a part of the telecommunications module of Fig. 4;
- Fig. 6: shows a perspective view of a second embodiment of a telecommunications module; and
- Fig. 7: shows a perspective view of a part of the telecommunications module of Fig. 6.

### Detailed Description of Embodiments of the Invention

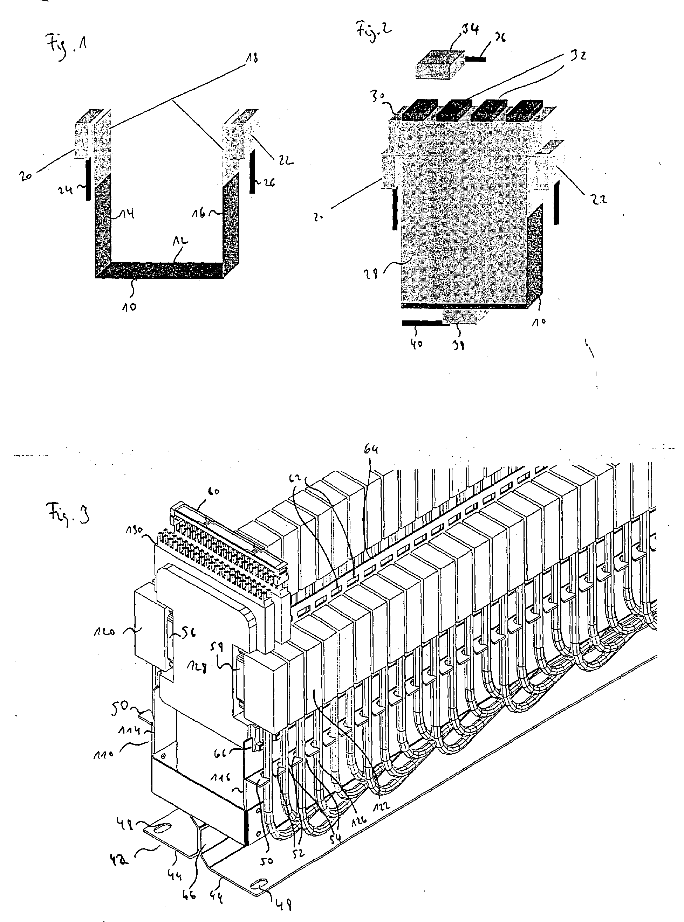

As shown in Fig. 1, a carrier 10 of a telecommunications assembly can have a trough-like shape. The trough has a bottom 12 and a first side 14 as well as a second side 16 opposite the first side. It should be noted'that the carrier 10 shown in Fig. 1 is comparably short so,that the shape of a bridge, turned upside down, is obtained. However, the carrier 10 can have a longer extension in the direction away from the viewer so that a long trough is obtained. The carrier can be made of metal.

An adapter 18 is attached to each of the side walls 14, 16. As schematically shown in the figure, the adapter is attachable to the side walls 14, 16. The adapter can be formed of plastic material. Furthermore, the adapter holds the connectors 20 and 22. A cable 24 and 26, respectively extends from the connector 20 and 22, respectively. The cable contains a number of wires, which terminate at contacts provided in the connector 20, 22. As will be described in more detail below, the contacts of the connector 20, 22 and, as a consequence, the wires bundled in the cable 24 and 26 can electrically be connected with a telecommunications module. As regards the connector 20, it can be mentioned that the cable 24 extending therefrom can, e.g., lead to a DSLAM. Furthermore, the cable 26 extending from the connector 22 can lead to ISDN or POTS services. Finally, the XDSL-line would in this case be connected with the front face of the telecommunications module. It is to be noted that the telecommunications module can be formed as a pure connection module. In this case, those lines, which are connected with the contacts and/or the connectors on a particular face are merely connected with contacts and/or connectors of another face. Furthermore, any face of the telecommunications module can be adapted to receive one or more protection plugs or modules. The above-described features are also applicable to the embodiments described hereinafter.

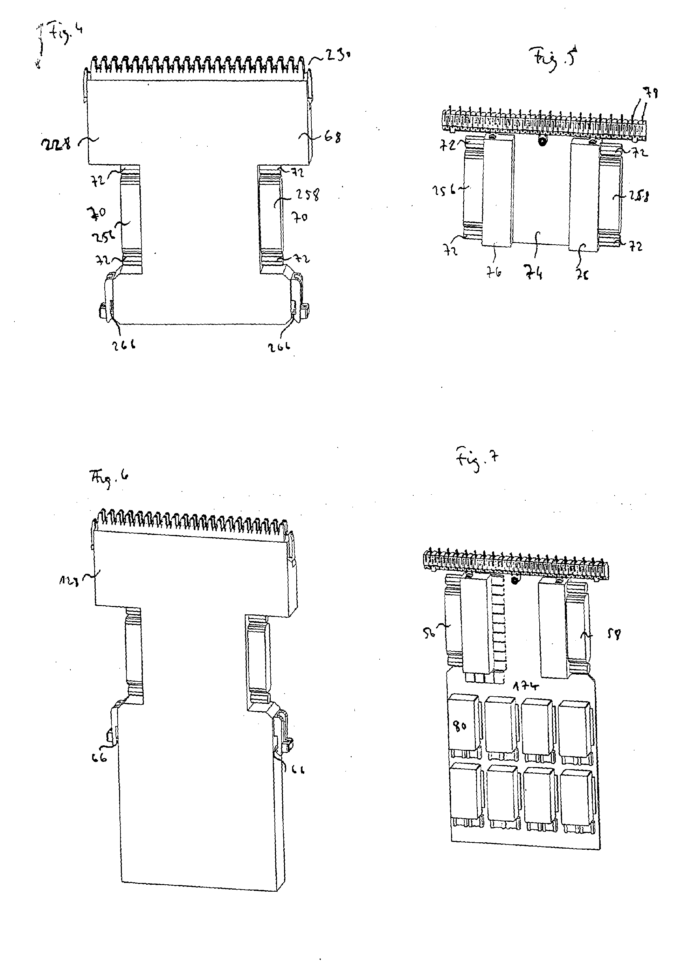

In Fig. 2, a telecommunications module 28 mounted to the carrier 10 is shown. As will be described in more detail below, the carrier 10 and the telecommunications module 28 have mechanical mounting means cooperating with each other. As shown in the front part 30 of the telecommunications module 28, the embodiment shown has connectors, in this case four connectors 32, which are formed at the front part. A connector 34, at which again several wires bundled to a cable 36 terminate, can be connected with one or more of the connectors 32 of the telecommunications module. Thus, electrical connections by means of connectors can be established at the front part 30. The alternative, namely connecting separate wires with separate contacts of the telecommunications module, will be described with reference to Fig. 3. As schematically shown in Fig. 2, the connectors 20 and 22, which were held by the adapters 18 in the situation of Fig. 1, are now connected with the telecommunications module 28. In the shown embodiment, a further connector 38, from which a cable 40 extends, can be connected with the telecommunications module 28 from a rear side thereof. Thus, all necessary connections between the telecommunications module and outside the wires can be established quickly and easily in the embodiment of Fig. 2.

This also applies to the embodiment of Fig. 3. The carrier 110 shown in Fig. 3 also has a generally trough-like structure with a bottom (not visible), a first side wall 114 and a second side wall 116. In a rear part of the carrier 110, mounting means 42 are provided in order to allow the carrier 110 to be mounted to a suitable equipment (not shown) in a telecommunications distribution point. In the case shown, the mounting means 42 comprise two substantially U-shaped profiles 44, which are joined at their bottom 46. The profiles 44 are connected with the bottom of the carrier 110 by means of a respective leg thereof, which is not visible in Fig. 3. In the depicted case, openings 48 are provided to allow mounting of the carrier 110 to a suitable equipment in a telecommunications distribution point. The carrier 110 and the mounting means 42 can be made of metal.

Along each of the side walls 114, 116, the carrier 110 is provided with cable guides 50. The cable guides 50 are formed as a ridge extending outwards from the respective side wall 114, 116. The cable guides are provided with a plurality of round, approximately circular openings or recesses 52, which open via a narrowed entrance area 54. The entrance area 54 allows a cable 126 to be pushed into the opening 52. The entrance area 54 can be somewhat smaller than the diameter of the cable 126. Thus, at least a small deformation of the cable 126 and/or the edges defining the entrance area 54 has to take place in order to allow the cable 126 to reach the opening 52. This force also would have to be applied, if the cable 126 including the connector 122 was to be removed from the opening 52. In the attached state, the cable guide serves to hold the cable 126 and, as a consequence, the connector 122, in the position shown in Fig. 3. In particular, this position is also held, when the telecommunications module 128 is not present yet. This is shown for all those connectors, which are in the (from the front) third and higher positions. The cable guide, furthermore, serves to guide the cables 126 in a well-organized manner to the rear of the carrier. At the rear (not visible in Fig. 3), the cables 126 run along the bottom of the carrier 110. Thus, a well organized arrangement of the cables 126 can be realized. For the connectors 122, it should be mentioned that these can be formed as D-Sub-connectors or -plugs.

As will be described in more detail with reference to Fig. 4 to 7, the telecommunications module 128 is provided with lateral connectors 56 and 58, which are complementary to the connectors 120 and 122. Thus, the connectors 120, 122 can, as shown in Fig. 3, be connected with the connectors 56, 58, and the electrical connections can be established.

At a front face 130 of the telecommunications module 128, plural contacts are exposed for the connection of wires therewith. The contacts, which are not shown in detail in Fig. 3, can be IDCs (insulation displacement contacts) as well as wire wrap pins. A marking frame or bridge 60 is shown for the right one of the two telecommunications modules 128 shown in the drawing. The frame 60 can contain a strip carrying information. Furthermore, the frame 60 is attachable to the telecommunications module 128 so that this can be marked with suitable information.

As can be seen for the first, left side wall 114 in the drawings, plural openings 62 are provided in the vicinity of a front edge 64 of the side wall 114. This structure is substantially identical for the right side 116, however, for the right side 116 is not visible in the drawing as well as for the left side 114. The openings 62 allow that a latch hook 66 (see the right part of the left module 128) can be inserted so as to retain the telecommunications module 128 on the carrier 110. It will be understood that the details of mounting the telecommunications module 128 to the carrier 110 are not particularly relevant for the invention. In particular, a different type of connection between the telecommunications module 128 and the carrier 110 can be chosen. In particular, a longer, continuous opening instead of the plural openings 62 can be formed. Furthermore, the carrier 110 can comprise a differently shaped locking edge which can cooperate with the latch hooks 66 of the telecommunications module 128. In the embodiment shown, the carrier 110 as well as the mounting means 42 can be formed of metal. The telecommunications module 128 can comprise a housing of plastic material. Also the marking frame 60 can be formed of plastic.

Fig. 4 shows a perspective view of a further embodiment of the telecommunications module 228. At the front face 230, the contacts are exposed. In the rear part, flexible latch hooks 266 are provided in order to allow the connection of the telecommunications module 228 with a carrier having a structure suitable to cooperate with the latch hooks 266. In the depicted case, a plastic housing 68 of the telecommunications module 228 is provided with recesses 70 at both sides. In these recesses, connectors 256 and 258 are located. The recesses 70 serve to accommodate outside connectors (not shown), such as connectors 120, 122 shown in Fig. 3, to be accommodated therein. Thus, the assembly of the telecommunications module 228 and, in the described case, two connectors, connected to the sides, comprise a dimension in the horizontal direction, which is compatible with the situation in the telecommunications distribution points. In particular, the described assembly can be configured to save space. This allows a high density of electrical connections to be established. In the vicinity of the connectors 256, 258, in the case shown to the front and to the rear thereof, threading elements 72 having internal threads are provided. These can be used to thread elements having external threads, which can be provided on the connectors 120, 122 (Fig. 3) into the threading elements 72 shown in Fig. 4.

Fig. 5 shows a part of the telecommunications module 228 shown in Fig. 4. The connectors 256 and 258 as well as the threading elements 72 are also visible in Fig. 4. However, the rest of the device shown in Fig. 5, is accommodated in the housing 68 of the telecommunications module and, therefore, not visible in Fig. 4. In particular, the connectors 256, 258 are connected with a printed circuit board 74 by means of suitable connecting members 76. In a front part thereof, the printed circuit board 74 is provided with a row of fork contacts 78. These fork contacts are adapted to contact sections of the contacts, which are as such exposed at the front face 230, in the interior of the housing. Suitable electrical connections (not shown) are formed on the printed circuit boards 74 between the fork contacts 78 and the connectors 256 and 258. Thus, the required electrical connections between the subscriber lines, the switch of the telecommunications company as well as patch cables can be provided. In particular, Fig. 5 shows an embodiment of a connection module, which merely establishes the necessary connections without processing the signal. However, protection components can, e.g., be provided on the printed circuit board 74. Thus, any equipment, which is connected with the telecommunications module, can be protected from overvoltage and/or overcurrent.

Fig. 6 shows the embodiment of a telecommunications module 128, which was already shown in Fig. 3. The general appearance of the telecommunications module, as far rearwards as the latch hooks 166 are located, corresponds to that of the embodiment of Fig. 4. However, the housing is extended in a rearwards direction in order to accommodate additional components.

As indicated in Fig. 7, additional electrical components 80 are located in this rearward part of the printed circuit board 174, which is also extended. E.g., splitter circuits can be formed by means of the electrical components 80. As apparent from Fig. 7, eight splitter circuits are formed in the case shown. Therefore, the shown embodiment of a telecommunications module can be used to connect eight subscribers therewith. Experiments have shown that the telecommunications module can be formed with a height (the dimension perpendicular to the plane of the printed circuit board 174) of approximately 17.5 mm. This corresponds to an extremely high density of electrical connections and subscriber lines, which can be connected with the telecommunications module. This effect is realized by means of making use of the sides, at which those electrical connections, which are additionally required, are formed by means of the connectors 56 and 58. As can be seen from Fig. 7, in particular from a comparison with Fig. 5, the printed circuit board 174 has a rear area, on which the electrical components 80 are provided, which is wider than the front area, at which the connectors 56, 58 are provided. Thus, the printed circuit board 174 is recessed in the front area. This allows, also when outside connectors are coupled with the connectors 56, 58, a space saving'assembly. Those parts of the device shown in Fig. 7, which have not been specifically described, substantially correspond to those shown in Fig. 5.

## Claims

1. A telecommunications module (28, 128, 228) having a front (30, 130, 230), a rear, a top, a bottom and two side faces, contacts being exposed on the front face (30, 130, 230), the front face (30, 130, 230) being exposed in a mounted state so as to allow the connection of wires and/or plugs (34) with the contacts, wherein at least one connector (56, 58, 256, 258) for receiving a complementary connector (20, 22, 120, 122) from the top, the bottom or a side, is provided on at least one of the top, bottom and the side faces.

2. The telecommunications module in accordance with claim 1, wherein at least one further,connector (32) is provided at the front (30, 130, 230) and/or the rear face.

3. The telecommunications module in accordance with claim 1 or 2, further including at least one printed circuit board (74, 174).

4. The telecommunications module in accordance with claim 3, wherein the printed circuit board (74, 174) is removable.

5. The telecommunications module in accordance with claim 3 or 4, wherein the printed circuit board (174) includes at least one recess for accommodating at least one connector (56, 58).

6. The telecommunications module in accordance with any of the preceding claims, further including at least one splitter circuit.

7. The telecommunications module in accordance with any of the preceding claims, further including at least one test access.

8. The telecommunications module in accordance with any of the preceding claims, further including a control module, which is electrically connected with the telecommunications module.

9. The telecommunications module in accordance with any of the preceding claims, wherein the telecommunications module (128) is provided with a marking element (60) attachable to the telecommunications module (128).

10. A combination of at least one telecommunications module (28, 128) and at least one carrier (10, 110), which is adapted to allow the telecommunications module (28, 128) to be mounted thereon.

11. The combination of claim 10, wherein the carrier (110) is adapted to allow a connector (120, 122), from which a cable (126) extends, to be mounted thereon.

12. The combination of claim 10 or 11, further including at least one adapter (18), which is mountable to the carrier (10) and adapted to mount the connector (20) thereon.

13. The combination of any of claims 10 to 12, wherein the carrier (110) includes at least one cable guide (50).
